# EUROPEAN PATENT APPLICATION

(11) **EP 1 895 451 A1**
(43) Date of publication of application: **05.03.2008**
(21) Application number: 05750841.8
(22) Date of filing: 20.05.2005
(51) Int. Cl.: G06K 19/16, B42D 15/10

(54) **PERSONAL IDENTIFICATION CARD COMPRISING A TWO-DIMENSIONAL IMAGE OF THE USER**

(30) Priority: 22.04.2005 ES 200500978
(71) Applicant: Microelectronica Española, S.A.U., 28002 Madrid (ES)
(72) Inventor: PEREZ AZNAR, Javier, E-28002 MADRID (ES)
(74) Representative: Carpintero Lopez, Francisco
(86) International application number: PCT/ES2005/000286
(87) International publication number: WO 2006/114454

(57) **Abstract**

The invention relates to a personal identification card of the type that is used to identify the holder in order for same to gain access to digital signature services, banking services, mobile telephone services, buildings, public transport, shops or similar or in the future Spanish electronic ID card (DNI Electronico). More specifically, the invention relates to a personal identification card, preferably a smart card or simply a card comprising a magnetic strip or a built-in chip, which is equipped with at least two different visible images of the person associated with the card, said images being disposed essentially in the same area of at least one of the faces of the card. The invention can be visually inspected in order to verify whether or not the card belongs to the holder.

## Description

### Object of the Invention

The invention relates to a personal identification card of the type that is used to identify the holder in, for example, digital signature, banking and mobile telephony services, for access to buildings, public transport, shops or in the future Spanish electronic ID card (DNI Electrónico). The invention relates to a personal identification card, preferably a smart card or simply a magnetic card or a card with a built-in chip.

The purpose of the invention is a personal identification card provided with means facilitating the verification of whether or not the card belongs to the holder by means of visual inspection.

### Background of the Invention

The use of smart cards is currently greatly extended, there being many applications for them. Their most frequent uses include mobile telephony, banking, personal identification, public transport, digital signature, shops, access control, etc.

Depending on the type of link with the exterior, smart cards can be classified as contact cards, contactless cards or dual cards.

Contact cards communicate with external devices as a result of the physical connection with the reader. To that end, it uses conductive connectors located in the outer part of the card.

On the other hand, contactless cards have an antenna located in the body of the smart card through which it communicates with the external reader.

Dual cards have the features of both cards, communication being possible with or without physical contact.

Smart cards are increasingly important in the field of security. This type of authentication cards is usually PKI (public key infrastructure), making forgery of the card virtually impossible. These cards usually identify an individual, therefore, the unequivocal link between the card and the holder thereof is very relevant, this type of link being carried out in different manners, such as a passive link by means of a photo printed in the body of the card, or an active link, such as the introduction of a pin or the reading of a biometric parameter such as fingerprints.

In the active link, the microprocessor verifies that the person is really the owner of the card. Or it at least ensures that the person knows the pin or has the biometric parameter present in the card. In contrast, in the passive link, the link between the person and the card is done by means of an inspection by an agent who wants to carry out said verification.

The passive link is more susceptible of being forged; for this reason, this type of link is protected with different security elements making its forgery more difficult. These elements can be, for example, watermarks, OVI (Optical Variable Ink), UVI (Ultraviolet Ink), IR (Infrared) ink, iridescent ink, holograms and other elements that are commonly used in notes and authentication documents. The security of these elements is based on the fact that the technology and machines used are not readily available for making the forgeries.

However, some passive systems, such as for example the mentioned photographs are not completely secure or sufficiently intuitive for the person who verifies it, because many times it depends on the sharpness of vision, degree of concentration or sense of touch of said person.

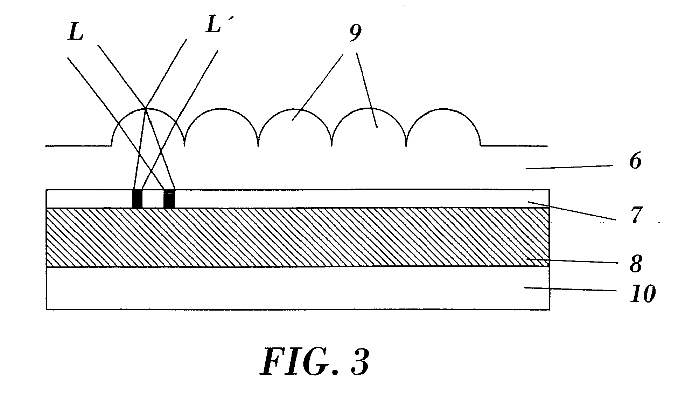

On the other hand, several techniques which allow forming a two-dimensional image enabling the viewing of different images completely and independently according to the observation angle thereof are widely known in the state of the art. Some of these known techniques, referred to as CLI (Changeable Laser Image) and MLI (Multilayer Laser Image) are based on the laser-engraving of images on laser-sensitive surfaces. The material that is normally used in this technique is formed by four different layers as shown in Figure 3, an upper transparent layer (6) forming lenses (9), a laser-sensitive layer (7), a white opaque sheet (8) which is normally printed and also covered with a lower transparent layer (10).

The upper transparent layer (6) acts as lenses directing the laser beam (L), (L') from different angles to specific areas of the laser-sensitive layer (7), the upper transparent layer (6) dos not have to be sensitive to laser energy and has to remain clean in the engraving process. The thickness of the upper transparent layer (6) is determined by the formula g = [n / (n - 1)] x r, wherein n is the refractive index of the material and r is the radius of the lens.

The laser-sensitive layer (7) is made of polycarbonate, the latter being sensitive to laser energy, which allows images to be engraved therein by means of a laser ray. The thickness of this layer is approximately 50 microns.

Several images are obtained in the laser-sensitive layer (7) by using different engraving angles, which allows viewing the images completely and independently according to the angle with which they are observed.

### Description of the Invention

The present invention satisfactorily solves the drawbacks set forth above, providing a personal identification card having a front face and a rear face (front and back of the card), and it is characterized in that it comprises at least two different visible images of the person associated with the card, such that said images are essentially disposed in the same area of at least one of the faces of said card. The images consist of a two-dimensional image such that each image is visible from a different observation angle (normally frontal and profile images of an individual).

Therefore, the present invention provides an additional degree of security to the passive link, because it is based on the insertion of two photographs of the holder of the card, allowing better identification. In order to prevent the drawback of the space that two images would occupy in the body of the card, the invention provides that these two photographs form a single two-dimensional image of the individual occupying the size of a single photograph, allowing the agent verifying the card to have a frontal image and a side image of the face of the individual. Different technologies can be used to carry out this two-dimensional image, CLI (Changeable Laser Image) laser technology or MLI (Multilayer Laser Image) laser technology preferably being used in the present invention.

CLI and MLI technologies allow engraving more than one image on the same surface, forming the so-called two-dimensional image. This surface has lenticular features and as a result, different images can be obtained depending on the angle of vision that is available in front of this surface; the created image is also called OVD (Optically Variable Device).

The insertion of the two-dimensional image allows better identification of the individual who claims to be the holder of the card and allows increasing the complexity of carrying out forgery, significantly increasing the passive security of the smart card. It is therefore possible to engrave a profile image and a frontal image of the person, and these two images could be observed by simply changing the angle of vision that the person who verifies it has in front of the card.

### Description of the Drawings

To complement the description being made and for the purpose of aiding to better understand the features of the invention according to a preferred practical embodiment thereof, a set of drawings is attached as an integral part of said description in which the following has been shown with an illustrative and non-limiting character:
Figure 1 shows a perspective view of one of the faces of a personal identification card in which the face of a person has been figuratively represented. The inclined observation angle with respect to which one of the images is visible is represented with a dashed line.
Figure 2 shows a view of the same face of the card of Figure 1, but from another oblique observation angle or perspective.
Figure 3 shows a schematic representation of the use of the CLI and MLI techniques known in the state of the art for reproducing two-dimensional images.

### Preferred Embodiment of the Invention

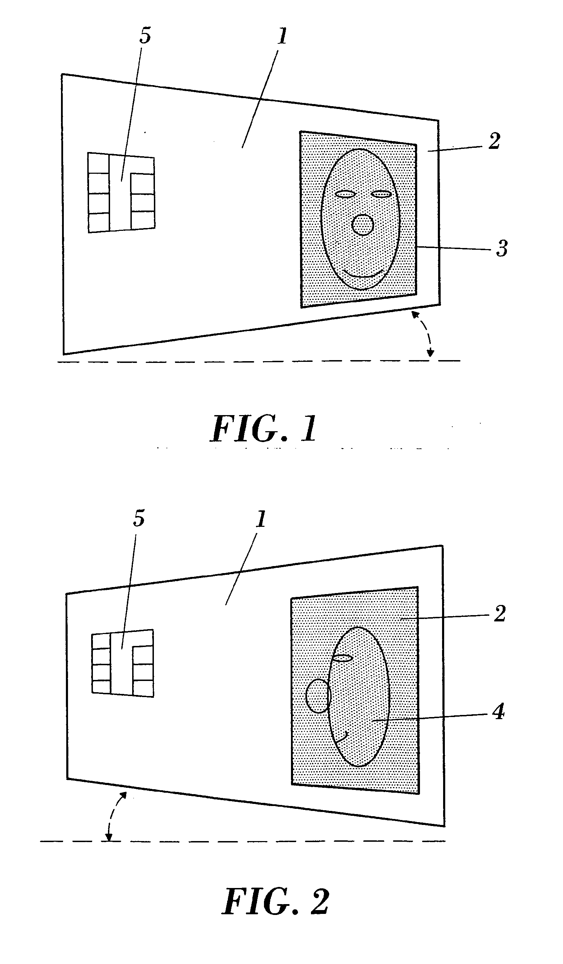

Figure 1 shows a personal identification smart card (1) observed from a small angle from a front view, which card has an integrated circuit (5) as well as a first image (3) corresponding to a full-face photograph of the face of the holder of the card in this embodiment. The first image (3) is printed by any suitable technique inside an area (2) of one of the faces of the card.

The card (1) has a second image (4) that is observed upon turning it a small angle in the opposite direction from a frontal view and corresponds to a profile photograph of the face of the holder, which image is essentially disposed inside the same area (2) occupied by the first image (3).

In this way, when the card (1) is observed from a slight angle with respect to the frontal view, the first image (3) is visible for an observer of the card (1), the second image (4) remaining hidden from this observation angle. By observing this same face of the card (1) from a slight angle opposite to the previous one with respect to the frontal view of this face of the card and as is shown in Figure 2, the second image (4) is now visible and the first image (3) remains hidden from this inclined observation angle.

With this technique, the card (1) has two photographs of the face of the holder of the card but occupying the same surface as single photograph, therefore it provides more visual information about the physical features of that person, the verification of whether the holder of the card is its owner being thus easier and more effective.

In other practical embodiments of the invention, the images or photographs can be disposed in another area of one of the faces of the card or can even be disposed in both faces thereof.

Instead of a full-face photograph and a profile photograph of the person, the photograph could consist of two profiles for example, or of photographs from other angles that are considered appropriate.

Several possibilities of practical embodiments of the invention are described in the attached dependent claims.

In view of this description and set of drawings, a person skilled in the art will understand that the embodiments of the invention that have been described can be combined in many different ways within the object of the invention. The invention has been described according to several preferred embodiments thereof but it will be evident for a person skilled in the art that many variations can be introduced in said preferred embodiments without exceeding the object of the claimed invention.

## Claims

1. A personal identification card having a front face and rear face, **characterized in that** it comprises at least two different visible images (3,4) of the person associated with the card (1), said images (3,4) being disposed essentially in the same area (2) of at least one of the faces of the card (1).

2. A card according to claim 1, **characterized in that** the images consist of a two-dimensional image, such that each image is visible from a different observation angle.

3. A card according to claim 1, **characterized in that** it comprises an upper transparent layer (6) forming a plurality of lenses (9), a white opaque layer (8) and a laser-sensitive layer (7) disposed between said upper layer (6) and said opaque layer (8).

4. A card according to the previous claims, **characterized in that** the images (3,4) are disposed in the laser-sensitive layer (7) under the lenses (9).

5. A card according to any of the previous claims, **characterized in that** the personal identity consists of the holder of the card, and **in that** the images consist of photographs from different angles of the face of the holder.

6. A card according to claim 4, **characterized in that** a first image consist of a full-face photograph of the face of said person and a second image consists of a profile photograph of said person.

7. A card according to any of the previous claims, **characterized in that** it has an integrated circuit or a magnetic strip that are able to store data.

8. A card according to claim 6, **characterized in that** it incorporates an antenna electromagnetically connected to said integrated circuit.
